# EUROPEAN PATENT APPLICATION

(11) **EP 0 950 619 A1**
(43) Date of publication of application: **20.10.1999**
(21) Application number: 99106285.2
(22) Date of filing: 16.04.1999
(51) Int. Cl.: B65D 85/72, A23L 1/00

(54) **Foil storage container and foil material stored in this container**

(30) Priority: 18.04.1998 JP 12402398; 30.09.1998 JP 29464798
(71) Applicant: Kabushiki Kaisha Tsukioka, Kakamigahara-shi, Gifu (JP)
(72) Inventor: Tsukioka, Tadao, Kabushiki Kaisha Tsukioka, Kakamigahara-shi, Gifu-ken (JP)
(74) Representative: Schwabe - Sandmair - Marx

(57) **Abstract**

A liquid accurately and evenly delivers a foil material (4) to a target object. When the foil material (4) is used for food products, such as for food decoration, the liquid is selected from any potable liquid, such as a syrup solution (5) , water, or a potable alcohol solution. The foil material (4) is a gold foil, a silver foil, a platinum foil, an aluminum foil, or an edible color foil. The resulting liquid (5) and foil material (4) combination permits the foil to be delivered accurately and evenly onto the target object (20) without clogging the foil storage container (6). The foil material (4) applied in this fashion adheres to target objects (20) without shrinking or wrinkling. In one embodiment, the liquid (5) and foil materials (4) are propelled by a propellant which is substantially completely evaporated before it reaches the target object (20).

## Description

### BACKGROUND OF THE INVENTION

The present invention relates to a foil storage container, which contains a foil material, such as foil pieces, foil powder, or the like. The present invention also relates to the foil material stored in the foil storage container.

Gold foils used in food decorating are conventionally added to food products using forceps, bamboo chopsticks, or fingertips. However, gold foils are extremely thin and easily affected by static electricity in the air. Furthermore, gold foils are easily torn when handled by these conventional means. While trying to add gold foils to a target location, the gold foils tear and scatter to areas other than the target location. As a result, a worker must work with extreme caution. The worker must also work very slowly since the gold foils tear and scatter when moved too quickly. These limitations result in work taking a large amount of time.

A conventional spray-type foil storage container is charged with gold powder and a liquified petroleum gas. The pressure of the liquified petroleum gas permits the gold powder to be sprayed onto food products. However, with the conventional spray-type foil storage container, the liquified petroleum gas emerges as a gas, propelling the gold powder onto a surface. In this type of device, the gold powder easily clogs the spray nozzle. The light-weight nature of the gold powder causes it to scatter then the gold powder is sprayed, together with a gas, onto the target location. Furthermore, gold powder sprayed in this conventional manner has poor adhesion, which results in a gold powder that is easily peeled from its target surface.

### OBJECTS AND SUMMARY OF THE INVENTION

It is an object of the present invention to provide a foil material and a foil storage container which overcomes the foregoing problems.

It is a further object of the present invention to provide a foil material and a foil storage container which permits smoothly discharging the foil material from the foil storage container without clogging the foil storage container.

It is yet a further object of the present invention to provide a foil material and a foil storage container which results in the foil material being quickly added to food and other targets.

It is still a further object of the present invention to provide a foil material and a foil storage container which results in a foil material having excellent adhesion to food or other targets.

Briefly stated, the present invention provides a liquid which accurately and evenly delivers a foil material to a target object. When the foil material is used for food products, such as for food decoration, the liquid is selected from any potable liquid such as a syrup solution, water, or a potable alcohol solution. The foil material is a gold foil, a silver foil, a platinum foil, an aluminum foil, or an edible color foil. The resulting liquid and foil material combination permits the foil to be delivered accurately and evenly onto the target object without clogging the foil storage container. The foil material applied in this fashion adheres to target objects without shrinking or wrinkling. In one embodiment, the liquid and foil materials are propelled by a propellant which is substantially completely evaporated before it reaches the target object.

According to an embodiment of the present invention, there is provided a system for depositing a comminuted foil on an object, comprising a foil storage container, a comminuted foil material in the container, at least one liquid in the container, a discharge opening for discharging the foil material together with the liquid from the container. Preferably, the at least one liquid is of a type which remains liquid at least long enough for the foil material and the liquid to reach the object.

According to another embodiment of the present invention, there is provided a system for depositing a comminuted foil on a object, comprising a foil storage container, a comminuted foil material in the container, a liquified petroleum gas in the container, a shellac coating adhered to the foil material stored in the container, a discharge opening for discharging the foil material, and means for permitting the liquified petroleum gas to propel the foil material onto the object.

According to another embodiment of the present invention, there is provided a foil material comprising at least one of foil pieces and a foil powder of at least one of gold foil, silver foil, platinum foil, aluminum foil, and edible color foil, a liquid containing the at least one, the at least one and the liquid being contained in a container, the container having a discharge opening for discharging said foil material together with the liquid from the container. Preferably, the liquid is of a type which remains liquid at least long enough for the foil material to be deposited from the container onto a target object.

According to a further embodiment of the present invention, there is provided a method of making a foil powder comprising selecting a foil from at least one of a gold foil, a silver foil, a platinum foil, an aluminum foil, and an edible color foil, coating a separation layer onto a support material, applying the foil onto the separation layer to form a decorative layer, immersing the decorative layer in a material which is capable of removing the separation layer, to leave the decorative layer, and pulverizing the decorative layer into a powder.

The above, and other objects, features and advantages of the present invention will become apparent from the following description read in conjunction with the accompanying drawings, in which like reference numerals designate the same elements.

### BRIEF DESCRIPTION OF THE DRAWINGS

Figure 1 is a vertical cross-section of a embodiment of the foil storage container of the present invention.
Figure 2 is a perspective view indicating the condition when gold foil pieces stored ill the foil storage container of the present invention, together with an edible syrup solution, are added to a liquid such as, for example, iced coffee.
Figure 3 is a perspective view indicating the condition when a gold foil powder stored in the container is discharged by the spray gas and added to food.

### DETAILED DESCRIPTION OF THE INVENTION

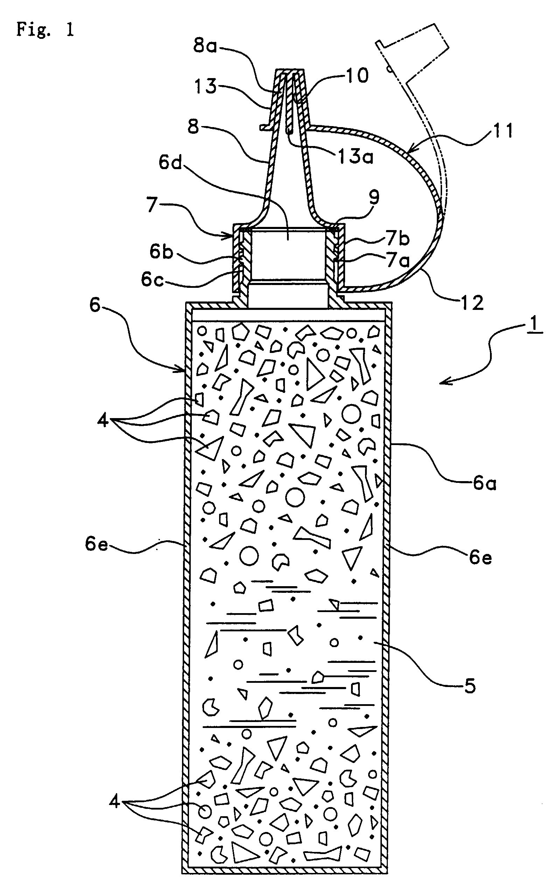

Referring to Figs. 1, 2, and 3, a foil storage container 1 stores foil material, such as gold foil pieces 4 or gold foil powder 22. The foil material is added to the target food product, such as a cup 2 of an iced coffee 3. The foil material for food decoration is stored inside foil storage container 1 together with a potable syrup solution 5. The figures are drawn to easily show gold foil pieces 4 and gold foil powder 22. The size, shape and amount of the plurality of gold foil pieces 4 and gold foil powder 22 are for illustration and description only, and are not accurately depicted in the figures.

Foil storage container 1 includes a container body 6, preferably made from a transparent, flexible resin material, which temporarily deforms and bends when pressed by fingers or the like. Polypropylene or polyvinyl chloride are preferred. A top 7, preferably made from a hard, preferably opaque resin, attaches to container body 6.

Container body 6 has a cylindrically-shaped container piece 6a. A cylindrical piece 6c, having an external thread 6b formed around its outer perimeter, projects from a top of container piece 6a. An opening 6d, located on the interior of cylindrical piece 6c, permits access to and from the inside of container body 6.

A top 7 includes a cylindrical piece 7b and a discharge tube 8. Cylindrical piece 7b has, on its interior perimeter, an internal thread 7a, which screws onto external thread 6b of cylindrical piece 6c. Discharge tube 8 extends from the top of cylindrical piece 7b, becoming narrower toward a tip 8a. A packing 9, inserted around the circumference of the top of cylindrical piece 7b, forms a seal between the top 7 and container body 6 when the top 7 and container body 6 are joined together. A discharge opening 10, at tip 8a of discharge tube 8, permits discharge of syrup solution 5 containing gold foil pieces 4 from container body 6. Since gold foil pieces 4 are dispensed in a liquid syrup solution, the dispersion and clogging when using the gaseous propellant of the prior art is avoided. A cap 11, covering tip 9a of discharge tube 9; prevents the undesired discharge of gold foil pieces 4 and syrup solution 5 from container body 6. Cap 11 includes a strap-like connecting piece 12, extending from the bottom of cylindrical piece 7b, and a cap body 13, which attaches to connecting piece 12. A stick-like rod member 13a, formed on the interior of cap body 13, fits into discharge opening 10, plugging discharge opening 10.

The foil material stored in foil storage container 1, can be a foil material other then gold foil pieces 4. The use of other foil materials, for example, foil pieces or foil powder of a silver foil, a platinum foil, or an edible color foil, also falls within the scope of the present invention. The gold foil, silver foil, or platinum foil added to food for food decoration is preferably an edible gold foil, silver foil, or platinum foil having high purity gold, silver, or platinum. For example, a high purity gold foil has a composition of 94.4% gold, 4.9% silver, and 0.7% copper. The composition of the high purity gold foil is not limited to the above example. An extremely high purity gold foil, having a gold composition of about 99.99%, can be obtained by manufacturing the gold foil by a spattering method. The edible color foil for food decoration is preferably a foil formed by adding a synthetic or a natural edible colorant to a natural resin, such as shellac, or a foil formed by adding a synthetic or a natural edible colorant to a protein, such as zein.

The term "edible liquid" is not limited to syrup solution 5. The edible liquid can be any potable liquid, solution, or suspension. The potable liquid can contain a potable volatile substance, such as ethanol (ethyl alcohol). Gold foil pieces 4 together with a potable alcohol solution are added to foods, such as dry snacks, when a lack of residual moisture is desired. The edible liquid can also be an edible suspension such as ketchup, mayonnaise, or the like which has a suitable viscosity.

Additional additives, such as fragrances, preservatives, thickening stabilizers, acidifiers, specific gravity modifiers, surface active agents, sweeteners other than syrup solutions, other food additives, edible natural products such as medicinal herbs, extracts from natural products, vitamins, food fibers, minerals, and other functional food elements, can be added as needed or desired.

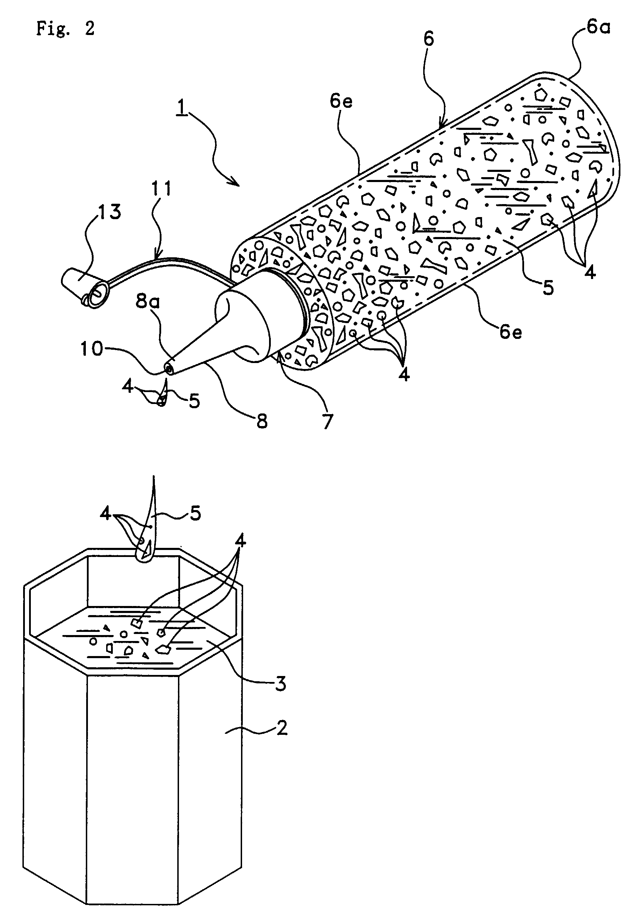

Referring now to Figure 2, gold foil pieces 4, stored in foil storage container 1 together with syrup solution 5, are added to iced coffee 3 in cup 2.

Cap body 13 of top 7 is removed from discharge tube 8. Discharge opening 10 of discharge tube 8 is moved to a location approximately directly above the center of iced coffee 3 inside cup 2. When both sides of container 1, near a middle area 6e of container piece 6a of container body 6, are squeezed, gold foil pieces 4, together with syrup solution 5, are discharged from discharge opening 10. Clogging of discharge opening 10 is prevented by passing the gold foil pieces 4 through discharge tube 8 with syrup 5. Furthermore, because gold foil pieces 4 are discharged together with syrup solution 5, gold foil pieces 4 are added quickly to iced coffee 3 in cup 2 without scattering. Narrow tip 8a of discharge tube 10 permits the accurate placement of gold foil pieces 4 and syrup 5 onto the target locations. The syrup 5 mixes in with iced coffee 3 and dissolves, resulting in only gold foil pieces 4 floating or suspended in iced coffee 3.

When gold foil pieces 4, stored in foil storage container 1, are added to iced coffee 3, gold foil pieces 4, together with edible syrup 5, are smoothly discharged through discharge opening 10 without clogging. Thus, gold foil pieces 4 are easily, quickly, and accurately added to the target iced coffee 3 without any scattering. Furthermore, since iced coffee 3 is a beverage in which a sugar syrup 5 can be mixed, foil storage container 1, containing syrup 5, is suitable for adding gold foil pieces 4 to iced coffee 3. When both sides middle area 6e of container body 6 are squeezed, gold foil pieces 4, together with syrup 5, are easily discharged from foil storage container 1. Since discharge tube 8 narrows toward tip 8a, gold foil pieces 4 can be accurately guided and added to any location, even those having a small surface area.

Foil storage container 1 can be used for adding foil material to food products other than iced coffee 3. These food products include not only various drinks such as iced tea, whisky, wine, or the like, but also various foods such as noodles, cookies, biscuits, candies, cakes, ice creams, gelatins, soups, and dry snacks. Liquids which are appropriate for these foods are selected to fill foil storage container 1. Water is preferably selected as the suitable liquid for food products in which water can be added, such as gelatin, soup, whisky, or the like. A sugar syrup solution is preferably selected as the suitable liquid for foods such as iced coffee or iced tea.

The present invention is not limited to the embodiment described above, and various changes can be made. For example, as long as foil storage container 1 can discharge foil material together with liquid, container body 6 is not required to be a flexible material. Container body 6 can include a transparent hard resin, a transparent glass material, or the like. In the case where container body 6 is inflexible, in order to discharge foil material and liquid stored in foil storage container 1, foil storage container 1 is tilted or shaken slightly as required. If the liquid stored in foil storage container 1 is a potable alcohol solution, a container which does not dissolve in an alcohol solution, such as a glass bottle, is preferred for foil storage container 1.

The present invention is also useful as a foil storage container for the storage of foil material, such as foil pieces or foil powder, which is added to objects other than food products. In other words, foil material, such as gold foil pieces 4, are stored together with a non-edible liquid, such as a liquid bath agent, in foil storage container 1. The resulting foil material, such as gold foil pieces 4, together with a non-edible liquid, such as a liquid bath agent (a soap), is smoothly discharged into, for example, the target hot water of a bathtub. The foil material is discharged without clogging and without scattering. The foil material is added quickly and accurately.

In an alternative embodiment, foil materials such as gold foil pieces 4, together with liquid hair conditioning agents, are stored in foil storage container 1. The foil material stored in foil storage container 1 is not limited to foil pieces or foil powder of go!d foil, silver foil, platinum foil, or edible colored foil. The foil material stored in foil storage container 1 can also be foil pieces or foil powder of aluminum foil, pigment foil, or other foil.

In another embodiment of the present invention, top 7 is replaced with a top equipped with-conventional manual pump, such as those used in shampoo solution containers. Foil pieces, such as gold foil pieces 4, together with a liquid, are discharged from the discharge opening at the top of foil storage container 1 by the action of the manual pump.

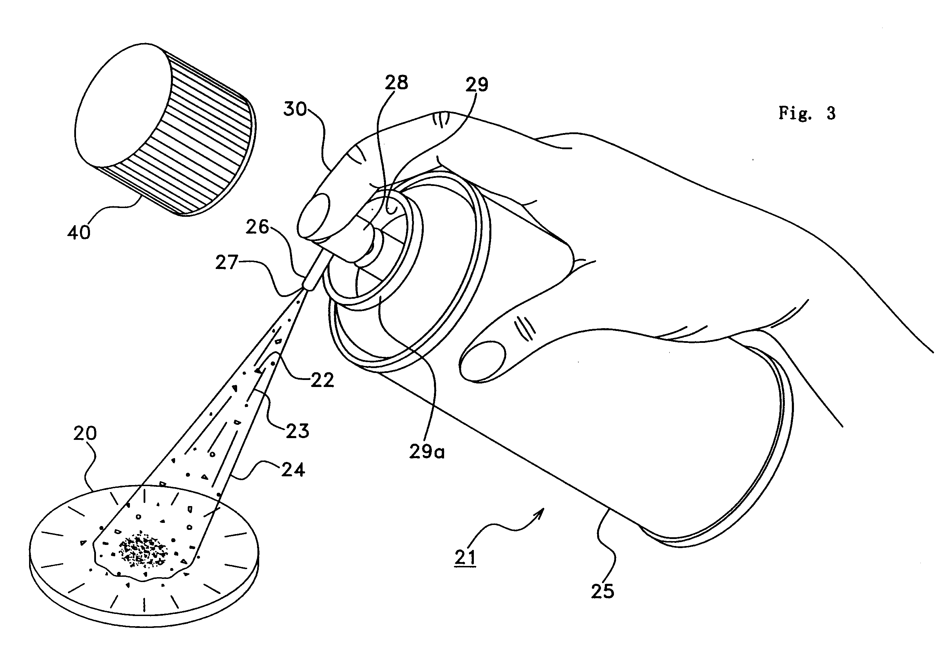

Referring now to Figure 3, a foil storage container 21 is shown. Foil storage container 21 stores foil material, including foil pieces or foil powder, of at least one foil selected from gold foil, silver foil, platinum foil, aluminum foil, and edible colored foil. This foil material is added to food products or other targets.

Edible foil material for food decoration, including foil pieces or foil powder, such as a gold foil powder 22, together with a potable alcohol solution 23, such as an ethyl alcohol solution, is stored in a container 21. The amount of potable alcohol solution 23 is preferably just enough to immerse and wet the foil material. This results in the least amount of an alcohol smell on the target object. A liquified petroleum gas (abbreviated as LPG) 24, comprising mainly butane and/or propane is charged in container 21 as the propellant gas.

Substantially all of LPG 24 evaporates before it reaches the target, causing minimal food safety concerns when food is the target. Thus, the material actually reaching the target is the alcohol with the gold foil powder 22. LPG 24 preferably contains at least one of butane and propane. If there is little residue on the food target product, and if it is not a food safety problem, LPG 24 containing methane, ethane, ethylene, propylene, butene, or liquified natural gas can also be used. In other words, there is no particular limitations on the propellant gas. The propellant gas is chosen from any substance normally used as an aerosol spray agent or other spray agent. Preferably, the propellant gas is a volatile substance with a constant vapor pressure that leaves little residue after discharging. In addition, compressed gases, such as carbon dioxide gas and nitrogen gas, which are maintained at a high pressure inside container body 25, can also be used as the propellant gas. Compressed air or other non-toxic compressed gases can also be used as the propellant gas.

Foil storage container 21 includes a container body 25 formed from a material capable of withstanding the vapor pressure of LPG 24 charged therein. An operation member 28, located at the top of foil storage container 21, acts as a, push button. A removable discharge tube 26, having a discharge opening 27 located at one end, attaches to the spray opening (not shown) of operation member 28.

Foil storage container 21 is a conventional aerosol container, having a body 25, formed as cylinder which is easily held in one hand. The bottom of container body 25 curves towards the interior of container body 25. A top 29 with a ring-shaped rim 29a attaches to the top of body 25. A removable cap 40 attaches to rim 29a to cover operation member 28 and discharge tube 26. In this embodiment of the invention, discharge tube 26, useful for accurate targeting, projects straight out from operation member 28. Container 21 can also be used when discharge tube 26 is removed. When discharge tube 26 is removed, the spray opening (not shown) of operation member 28 acts as discharge opening 27.

The use foil storage container 21 is described as follows. Container 21 is first lightly shaken to distribute gold foil powder. Next, discharge opening 27 is pointed toward the location where gold foil powder 22 is desired. Operation member 28 is then pushed with a finger 30, opening a valve (not shown) inside container body 25. By the force of the spray of LPG 24, gold foil powder 22, stored in container body 25 together with potable alcohol solution 23, is discharged from discharge opening 27 toward the target food product, such as a biscuit 20. Compared with foil storage container 1 (see Fig. 2), foil storage container 21 allows the foil material of gold foil powder 22 to reach the food more quickly. Gold foil powder 22 is smoothly discharged, together with potable alcohol solution 23, without clogging and without scattering.

When gold foil powder 22 and potable alcohol solution 23 are added to a food product, such as a biscuit 20, in the manner described above, potable alcohol solution 23 evaporates within a few seconds. Gold foil powder 22 adheres to the food product with extremely good adhesion. In the case where the food product is a dry food with little water content, such as biscuit 20 or a cookie, gold foil powder 22 shows excellent adhesion properties. When the adhesion of gold foil powder 22, applied with foil storage container 21, is observed under a microscope, gold foil powder 22 is neither shrunken nor wrinkled. When the adhesion of gold foil powder 22, applied with the dry type container of the prior art containing no potable alcohol solution, is observed under a microscope, gold foil powder 22 appears both shrunken and wrinkled. These observations confirm that gold foil powder 22 adheres to the food product by spreading out on the food, eliminating the air between the target and gold foil powder 22. Gold foil powder 22 also adheres well to targets other than food, such as paper, wood products, plastic products, leather, human hair, skin, or the like.

Foil storage container 21 is further advantageous since it is manufactured without any complex operations. Foil storage container 21 is a container which uses, as its liquid, water, a syrup solution, or any other compatible liquid. When the propellant gas is a fat soluble substance, potable alcohol solution 23 is preferred over water or a syrup solution to maintain uniformity inside container 21.

In another embodiment of the present invention, foil material, including foil pieces or foil powder of at least one foil selected from a gold foil, a silver foil, a platinum foil, an aluminum foil, and an edible color foil, together with a shellac coating, is stored inside the same container as the container of the embodiment of Fig. 3. The container is charged with LPG 24, preferably comprising butane and/or propane. In the foil storage container of this embodiment, using a shellac coating, the gold foil is pulverized with the simple procedure described below, and a gold foil powder is prepared.

A thin separation layer of silicone or the like is coated onto a support material, such as polyethylene terephthalate (PET). Plastic films other than PET, such as polyester, polypropylene, polycarbonate, polyamide, or the like, can be used as the support material. A coating layer of shellac is coated on top of the support material using an applicator such as a gravure coater. On top of the shellac coating, a decorative layer, comprising gold or the like, is formed by a spattering method, a vacuum deposition method, an activated reaction vapor deposition method, an ion plating method, or the like. The spattering method is preferred when a high purity gold layer is desired. The decorative layer, comprising gold or the like, separates readily from the PET, but it separates together with the shellac coating. The decorative gold layer, supported and hardened by the shellac, is easily made into a powder using a grinding machine. The result is a gold foil powder with an adhering shellac coating.

The gold foil powder prepared in this manner is stored inside a foil storage container 21 together with LPG 24, comprising butane and/or propane. When the gold foil powder prepared in this manner is stored in foil storage container 21 for about 10 days (the number of days may differ depending on the conditions), substantially all of the shellac coating adhering to the gold foil powder is dissolved in LPG 24. The result is a gold foil powder freely suspended in LPG 24 along with a small amount of shellac.

When gold foil powder is added to a food, such as biscuit 20, using foil storage container 21, foil storage container 21 is first slightly shaken. Next, discharge opening 27 is pointed towards the location where gold foil powder is desired. Operation member 28 is pushed with finger 30. The force of the spray of LPG 24, discharges gold foil powder, stored in container body 25, through discharge opening 27 towards the target food product. Compared with foil storage container 1 (see Fig. 2), this foil storage container 21 allows the foil material of gold foil powder to reach, the food more quickly. The gold foil powder, together with the dissolved shellac, is smoothly discharged in a flowing manner without any clogging or scattering, quickly reaching the food product. The propellant LPG 24 is substantially completely evaporated before it contacts the food, leaving only the shellac and gold foil powder 22 completing the trip to the food product.

A method for making foil storage container 21 and gold foil powder 22 which is stored in container 21 is described below.

### (1) Forming a decorative layer comprising gold.

A thin separation layer of silicone was coated onto a support material of polyethylene terephthalate (PET). On top of the PET, a decorative layer, comprising gold, was formed by a spattering method. The decorative layer can comprise metals other than gold, such as silver or platinum, or the like. The decorative layers for these metals is formed by the same steps.

### (2) Separating the decorative layer comprising gold from the support material.

The laminate prepared in (1) was immersed in a 99% potable ethyl alcohol solution (abbreviated as alcohol solution) for approximately 24 hours. The decorative layer comprising gold was then easily separated from the support material. The purity of the alcohol solution can be less than 99%, however, in order to maintain the volatiliy of the alcohol solution, it is preferred to have a minimal amount of a poorly volatilizing solvent, such as water. If the target is a food product which contains a large amount of water, an alcohol solution with a large water content can be used since there are no disadvantages in having excess water present.

### (3) Obtaining gold foil powder immersed in alcohol solution.

The support material was removed from the alcohol solution of (2). The alcohol solution was stirred with a stirring machine, such as a mixer. The decorative layer comprising gold was pulverized into gold foil powder 22. Next, the alcohol solution containing gold foil powder 22 was passed through a sieve of mesh 30 (500 micrometer). The filtrate was left standing for a period of time to allow gold foil powder 22 to substantially settle at the bottom of the alcohol solution. The upper alcohol solution, containing substantially no gold foil powder 22, was removed by decantation. The lower layer, containing the alcohol solution with the settled gold foil powder 22 was retained. In the resulting alcohol solution, there was approximately 0.1 g of gold foil powder 22 for 2 g of alcohol solution. At this concentration, gold foil powder 22 is considered immersed and wetted by the alcohol solution.

### (4) Filling container body 25 with gold foil powder 22 immersed in alcohol.

Gold foil powder 22 immersed in the alcohol solution prepared in (3), together with LPG 24, was inserted into container body 25 by conventional methods. The composition ratio of LPG 24 was 7 weight parts of propane for 93 weight parts of butane. The composition ratio of LPG 24 is not to limited to the above, and commercial LPG 24 can be used.

Conventional foil storage containers are difficult to fill with a foil material, such as gold foil powder 22, at a constant concentration. With the present invention, by filling powder 22 together with a liquid such as an alcohol solution, the amount of gold foil powder is easily quantified.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A system for depositing a comminuted foil on an object, comprising:
a foil storage container;
a comminuted foil material in said container;
at least one liquid in said container; and
a discharge opening for discharging said foil material together with said liquid from said container.

2. A system according to claim 1, wherein said foil material includes at least one of a foil powder and foil pieces.

3. A system according to claim 2, wherein:
said foil material is at least one foil selected from gold foil, silver foil. platinum foil, aluminum foil, and an edible color foil; and
said liquid is an edible liquid.

4. A system according to claim 3, wherein said edible liquid is a liquid selected from at least one of water, a syrup solution, and a potable alcohol solution.

5. A system according to claim 1, wherein said liquid is a liquid bath agent.

6. A system according to claim 1, further comprising:
a container body of said foil storage container; and
said container body includes a flexible material.

7. A system according to claim 1, further comprising:
a propellant gas in said foil storage container; and
means for permitting said propellant gas to propel said foil material onto said object.

8. A system according to claim 7, wherein said propellant gas is a liquified petroleum gas.

9. A system according to claim 3, further comprising:
a propellant gas in said foil storage container; and
means for permitting said propellant gas to propel said foil material onto said object.

10. A system according to claim 9, wherein said edible liquid is a potable alcohol solution.

11. A system according to claim 1, wherein said discharge opening is formed at a tip of an extended, narrow discharge tube attached to said foil storage container.

12. A system for depositing a comminuted foil on an object, comprising:
a foil storage container;
a comminuted foil material in said container;
a liquified petroleum gas in said container;
a shellac coating adhered to said foil material stored in said container;
a discharge opening for discharging said foil material; and
means for permitting said liquified petroleum gas to propel said foil material onto said object.

13. A system according to claim 12, wherein said foil material includes at least one of a foil powder and foil pieces.

14. A system according to claim 13, wherein said foil material is et least one foil selected from gold foil, silver foil, platinum foil, aluminum foil, and an edible color foil.

15. A system according to claim 12, wherein substantially all of said shellac coating adhering to said foil material is dissolved in said liquified petroleum gas.

16. A foil material comprising:
at least one of foil pieces and a foil powder;
a liquid containing said at least one; and
said at least one and said liquid being contained in a container.

17. A foil material according to claim 16, wherein said container has a discharge opening for discharging said foil material together with said liquid from said container.

18. A foil material according to claim 16, wherein said at least one is at least one of gold foil, silver foil, platinum foil, aluminum foil, and an edible color foil.

19. A foil material according to claim 16, wherein said liquid is a liquid bathing agents.

20. A foil material according to claim 16, further comprising a propellent gas in said container.

21. A foil material according to claim 16, wherein said liquid is an edible liquid.

22. A foil material according to claim 20, wherein said propellent gas is a liquified petroleum gas.

23. A foil material as described in claim 21, wherein said edible liquid is a liquid selected from at least one of water, a syrup solution, and a potable alcohol solution.

24. A method of making a foil powder suspension comprising:
selecting a foil from at least one of a gold foil, a silver foil, a platinum foil, an aluminum foil, and an edible color foil;
coating a separation layer onto a support material;
applying said foil onto said separation layer to form a decorative layer;
immersing said decorative layer in a material which is capable of removing said separation layer, to leave said decorative layer; and
pulverizing said decorative layer into a powder.

25. A method of making a foil powder suspension according to claim 24, further comprising:
said material is an alcohol solution;
allowing said powder to settle in said alcohol solution; and
decanting off a top layer of said alcohol solution containing substantially none of said powder.

26. A method of making a foil powder suspension according to claim 24, wherein said separation layer includes a silicone.

27. A method of making a foil powder suspension according to claim 24, wherein said support material is selected from a polyethylene terephthalate, a polyester, a polypropylene, a polycarbonate, or a polyamide.
